# EUROPEAN PATENT APPLICATION

(11) **EP 3 666 562 A1**
(43) Date of publication of application: **17.06.2020**
(21) Application number: 18843610.9
(22) Date of filing: 02.08.2018
(51) Int. Cl.: B60G 11/16, B60G 3/20, B60G 3/24, F16C 17/04, F16C 33/12, F16F 9/54

(54) **BEARING AND SUSPENSION**

(30) Priority: 08.08.2017 JP 2017153594
(71) Applicant: Oiles Corporation, Tokyo 108-0075 (JP)
(72) Inventor: IGARASHI, Yoshiteru, Fujisawa-shi Kanagawa 252-0811 (JP); MORISHIGE, Kouichi, Fujisawa-shi Kanagawa 252-0811 (JP); NAGASHIMA, Tsuyoshi, Ober-Moerlen 61239 (DE)
(74) Representative: Strehl Schübel-Hopf & Partner
(86) International application number: PCT/JP2018/029121
(87) International publication number: WO 2019/031396

(57) **Abstract**

The purpose of the present invention is to improve the driving stability of a vehicle in which a double wishbone type or multi-link type suspension is adopted. A double wishbone type suspension (1) has a sliding bearing (2) disposed between a coil spring (8) provided coaxially with a shock absorber (7) and an upper support (9) for mounting the coil spring (8) to the body of the vehicle along with the shock absorber (7), the sliding bearing (2) permitting the coil spring (8) and the upper support (9) to rotate relative to each other. The sliding bearing (2) permits the coil spring (8) and the upper support (9) to rotate relative to each other with torque lower than torque generated by the torsion of the coil spring (8) caused by the load of the vehicle acting on a damper assembly (6).

## Description

### Technical Field

The present invention relates to a bearing that is used for a double wishbone type suspension and a multi-link type suspension.

### Background Art

As a suspension for a vehicle, a double wishbone type suspension, a multi-link type suspension, and a strut type suspension are known. Each of the double wishbone type suspension and the multi-link type suspension has a plurality of arms, a shock absorber, and a spring (for example, the Patent Literatures 1 and 2), and the shock absorber and the spring are not rotated by steering operation, differently from the strut type suspension. Accordingly, steering operation does not apply torque to the shock absorber and the spring, and thereby strokes (expansion and contraction) of the shock absorber become smoother, and thereby movements of the links become smoother, and the driving stability is improved in comparison with the strut type suspension.

### Citation List

### Patent Literature

Patent Literature 1: Japanese Unexamined Patent Application Laid-Open No. H10-315740
Patent Literature 2: Japanese Unexamined Patent Application Laid-Open No. 2007-50856

### Summary of Invention

### Technical Problem

However, both in the double wishbone suspension and in the multi-link type suspension too, when the load of the vehicle is applied from the direction inclined with respect to the axis of the shock absorber, the load received by the spring becomes uneven at positions in the spring. Accordingly, the spring is twisted and generates torque as its reaction force. This torque affects movements of the links and can deteriorate the driving stability. In particular, in the case where the spring is a coil spring, the spring is twisted at the times of expansion and contraction owing to the structure of the coil spring, and generates torque as its reaction force, so that the torque generated by receiving the load of the vehicle is increased and the possibility of deteriorating the driving stability is further increased.

The present invention has been made taking the above conditions into consideration, and an object of the invention is to improve the driving stability of a vehicle that employs a double wishbone type or multi-link type suspension.

### Solution to Problem

In the present invention, to solve the above problems in the double wishbone type or multi-link type suspension, a bearing is disposed between one end of the spring and the fixing part for this end of the spring so as to allow relative rotation between the spring and the fixing part. Here, it is favorable that the bearing can be rotated by torque smaller than the torque generated by a twist of the spring caused by the load of the vehicle.

For example, the present invention provides a bearing used for a double wishbone type or multi-link type suspension which has a plurality of arms, a shock absorber, and a spring, wherein:
the bearing is disposed between one end of the spring and a fixing part for the one end of the spring, and allows relative rotation between the spring and the fixing part.

Further, the present invention provides a double wishbone type or multi-link type suspension, comprising:
a plurality of arms;
a shock absorber;
a spring; and
the above-described bearing, which is disposed between the one end of the spring and the fixing part for the one end of the spring.

### Advantageous Effects of Invention

According to the present invention, the bearing disposed between the one end of the spring and the fixing part for the end of the spring allows relative rotation between the spring and the fixing part, and thereby it is possible to prevent that the torque generated by a twist of the spring caused by the inputted load affects the movement of the links. Thereby, according to the present invention, it is possible to improve the driving stability of the vehicle that employs the double wishbone type or multi-link type suspension.

### Brief Description of Drawings

Fig. 1 is a schematic view showing a double wishbone type suspension 1 of one embodiment according to the present invention;
Fig. 2 is a partial cross-section view showing a damper assembly 6, a sliding bearing 2, and an upper support 9, as components of the double wishbone type suspension 1;
Figs. 3(A), 3(B), and 3(C) are respectively a front view, a back view, and a side view of the sliding bearing 2, and Fig. 3(D) is an A-A cross-section view of the sliding bearing 2 shown in Fig. 3(A);
Fig. 4 is an enlarged view of the part B of the sliding bearing 2 shown in Fig. 3(D);
Figs. 5(A), 5(B), and 5(C) are respectively a front view, a back view, and a side view of an upper case 21, and Fig. 5(D) is a C-C cross-section view of the upper case 21 shown in Fig. 5(A);
Figs. 6(A), 6(B), and 6(C) are respectively a front view, a back view, and a side view of a lower case 22, and Fig. 6(D) is a D-D cross-section view of the lower case 22 shown in Fig. 6(A); and
Figs. 7(A), 7(B), and 7(C) are respectively a front view, a back view, and a side view of a center plate 23, Fig. 7(D) is an E-E cross-section view of the center plate 23 shown in Fig. 7(A), and Fig. 7(E) is an enlarged view of the part F of the center plate 23 shown in Fig. 7(D).

### Description of Embodiments

In the following, one embodiment of the present invention will be described.

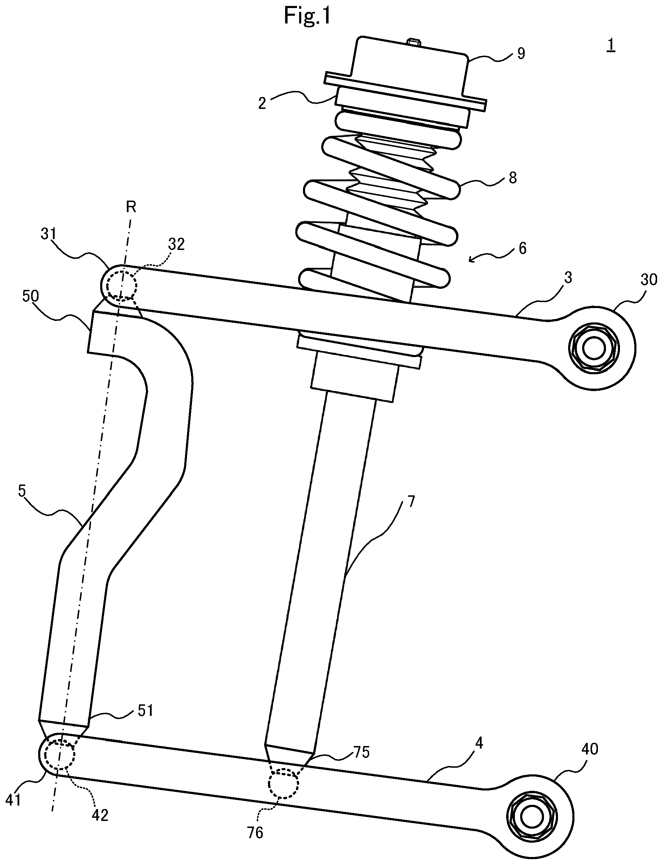

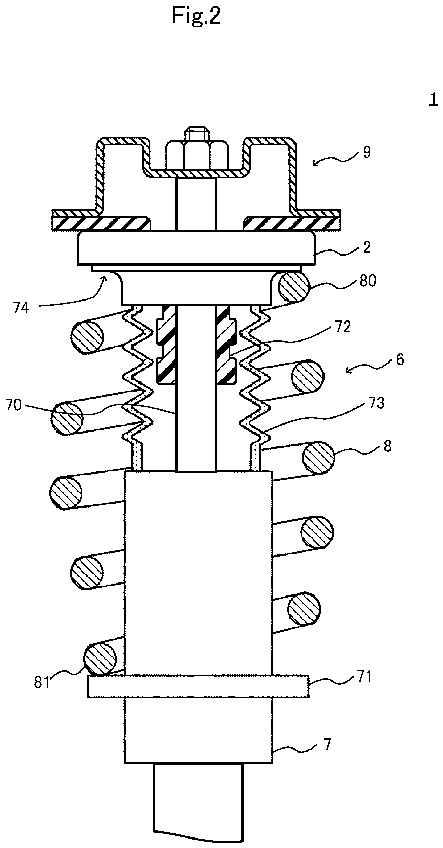

Fig. 1 is a schematic view showing a double wishbone type suspension 1 of one embodiment of the present invention. Further, Fig. 2 is a partial cross-section showing a damper assembly 6, a sliding bearing 2, and an upper support 9, as components of the double wishbone type suspension 1.

The double wishbone type suspension 1 is used for suspension of a vehicle such as an automobile, and, as shown in Fig. 1, comprises: an upper arm 3, one end 30 of which is fixed to the side of the body (not shown) of the vehicle; a lower arm 4, one end 40 of which is fixed to the side of a sub-frame (not shown) of the vehicle; a carrier 5, one end 50 of which is fixed to the other end 31 of the upper arm 3 via a ball joint 32, and the other end 51 of which is fixed to the other end 41 of the lower arm 4 via a ball joint 42, so that a tire (not shown) of the vehicle is supported rotatably around the turning axis R; the damper assembly 6, which includes a shock absorber 7 whose one end 75 is fixed to the lower arm 4 via a hinge 76; the upper support 9 for fixing the damper assembly 6 to the side of the body of the vehicle; and the sliding bearing 2, which is disposed between the damper assembly 6 and the upper support 9.

As shown in Fig. 2, the damper assembly 6 comprises, in addition to the shock absorber 7, a coil spring 8, a lower spring seat 71, a bump stopper 72, and a dust boot 73.

The coil spring 8 is disposed coaxially with the shock absorber 7 so as to surround the shock absorber 7. The upper end 80 of the coil spring 8 is supported by an upper spring seat 74 provided in the sliding bearing 2, while the lower end 81 of the coil spring 8 is supported by the lower spring seat 71 provided in the shock absorber 7.

The bump stopper 72 prevents collision of the shock absorber 7 against the body of the vehicle when a piston rod 70 is compressed. Although, here, the bump stopper 72 is mounted on the piston rod 70 of the shock absorber 7, the bump stopper 72 may be mounted on the upper support 9.

The dust boot 73 is mounted to cover the piston rod 70 on which the bump stopper 72 is mounted, and prevents attaching of dust, muddy water, and the like to the piston rod 70.

As shown in Fig. 2, the sliding bearing 2 is disposed between the damper assembly 6 and the upper support 9, and supports the load of the vehicle applied to the damper assembly 6 while allowing relative rotation between the coil spring 8 and the upper support 9.

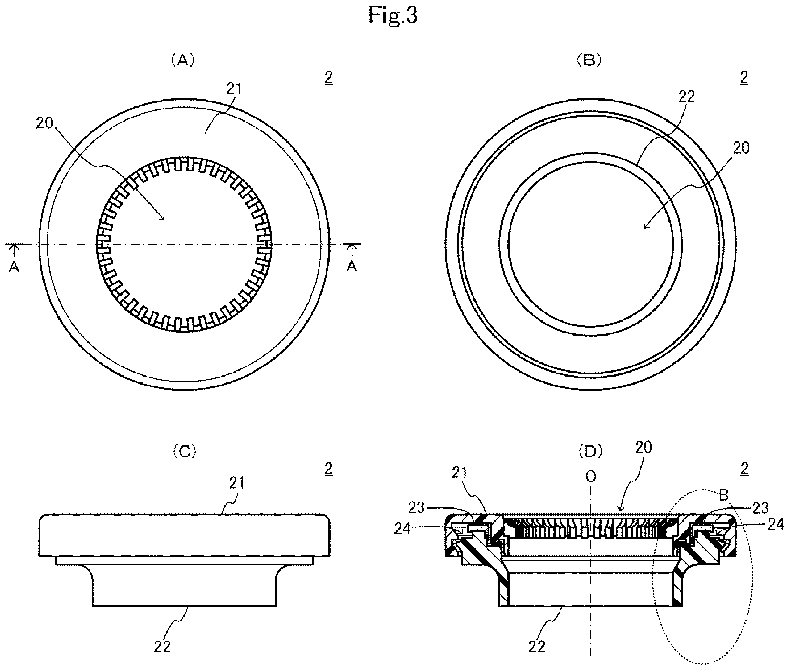

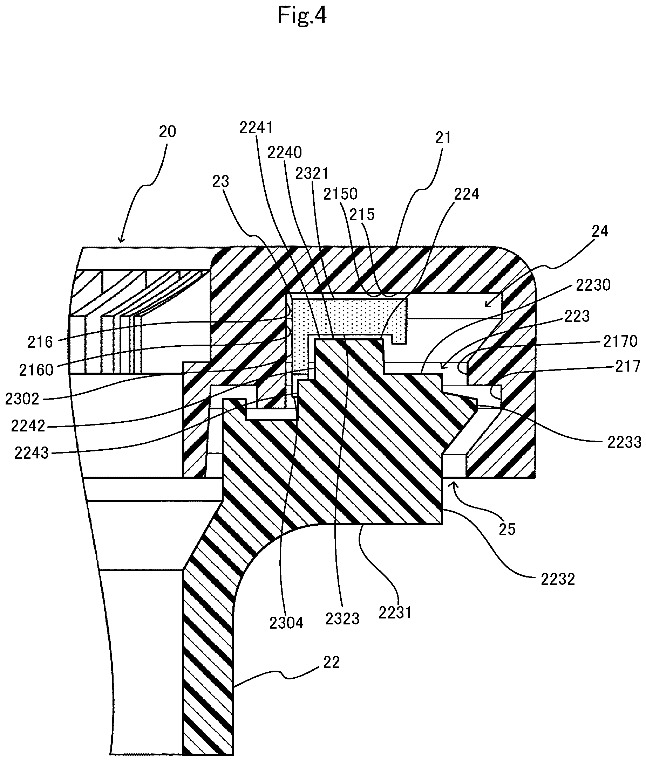

Figs. 3(A), 3(B), and 3(C) are respectively a front view, a back view, and a side view of the sliding bearing 2, and Fig. 3(D) is an A-A cross-section view of the sliding bearing 2 shown in Fig. 3 (A). Further, Fig. 4 is an enlarged view of the part B of the sliding bearing 2 shown in Fig. 3(D).

As shown in Figs. 3 and 4, the sliding bearing 2 has a receiving hole 20 for receiving the piston rod 70 on which the bump stopper 72 is mounted. Further, the sliding bearing 2 comprises: an upper case 21; a lower case 22, which is rotatably combined with the upper case 21 and forms an annular space 24 between the upper case 21 and the lower case 22; and an annular center plate 23 disposed in the annular space 24.

The upper case 21 is formed of thermoplastic resin superior in sliding characteristics such as polyacetal resin impregnated, if necessary, with lubrication oil. The upper case 21 is fixed to the upper support 9 in a state that the piston rod 70 is inserted in the upper case 21.

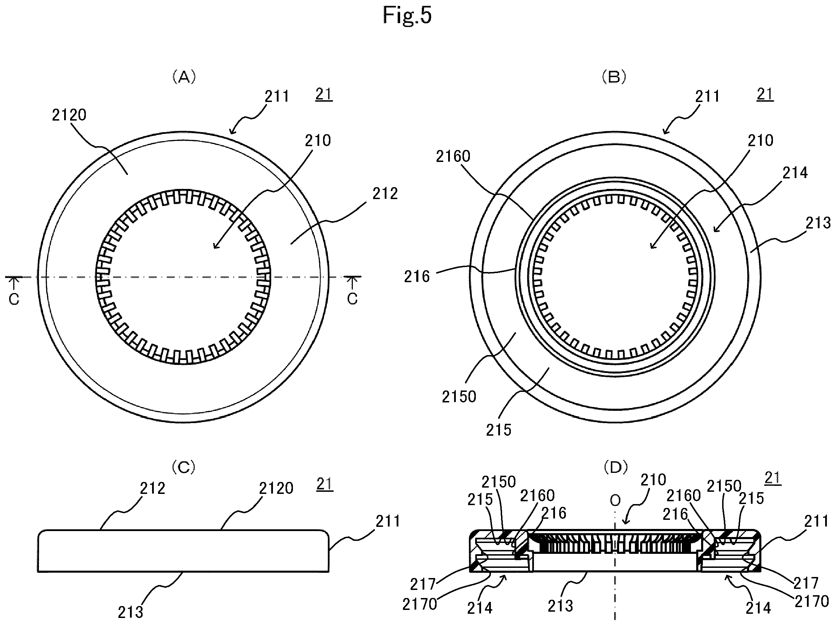

Figs. 5(A), 5(B), and 5(C) are respectively a front view, a back view, and a side view of the upper case 21, and Fig. 5(D) is a C-C cross-section view of the upper case 21 shown in Fig. 5(A).

As shown in Fig. 5, the upper case 21 comprises: annular upper case body 211 having an insertion hole 210 for inserting the piston rod 70; a fixing surface 2120, which is to be fixed to the upper support 9 and formed in the upper surface 212 of the upper case body 211; an annular groove 214, which is formed in the lower surface 213 of the upper case body 211 and forms the annular space 24 by the rotatable combination with the lower case 22; an annular thrust support object surface 2150, which is formed in the groove bottom 215 of the annular groove 214 and slides on a below-described thrust bearing surface 2321 of the center plate 23; and a cylindrical radial support object surface 2160, which is formed in the inner peripheral side wall 216 of the annular groove 214 and slides on a below-described radial bearing surface 2302 of the center plate 23.

In the outer peripheral side wall 217 of the annular groove 214, there is formed a concave and convex part 2170, which forms, in combination with the lower case 22, a labyrinth 25 (See Fig. 4) communicating with the annular space 24 when the upper case 21 is rotatably combined with the lower case 22. Since the gap communicating with the annular space 24 between the upper case 21 and the lower case 22 forms the labyrinth 25, it is possible to reduce the possibility that dust, muddy water, and the like intrude into the annular space 24 through this gap.

The lower case 22 is formed of thermoplastic resin such as polyamide reinforced, if necessary, by glass fiber or the like, and supports the upper end 80 of the coil spring 8 in a state that the piston rod 70 on which the bump stopper 72 is mounted is inserted in the lower case 22.

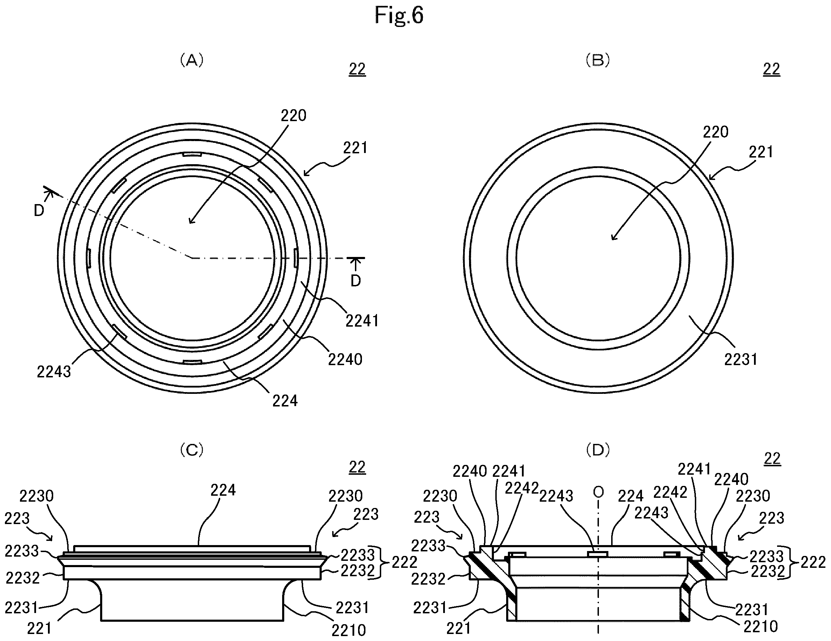

Figs. 6(A), 6(B), and 6(C) are respectively a front view, a back view, and a side view of the lower case 22, and Fig. 6(D) is a D-D cross-section view of the lower case 22 shown in Fig. 6(A).

As shown in Fig. 6, the lower case 22 comprises: a cylindrical lower case body 221 having an insertion hole 220 for inserting the piston rod 70 on which the bump stopper 72 is mounted; a flange part 223, which is formed on the side of the upper end 222 of the lower case body 221, to project outward in the radial direction from the outer peripheral surface 2210 of the lower case body 221; and an annular protrusion 224 protruding toward the upper case 21, which is formed on the upper surface 2230 of the flange part 223 and inserted into the annular groove 214 formed in the lower surface 213 of the upper case body 211 of the upper case 21, to form the annular space 24 when the lower case 22 is rotatably combined with the upper case 21.

A concave and convex part 2233 is formed in the outer peripheral surface 2232 of the flange part 223, to form, in combination with the upper case 21, the labyrinth 25 (See Fig. 4) communicating with the annular space 24 when the lower case 22 is rotatably combined with the upper case 21.

In the upper surface 2240 of the annular protrusion 224, a placement surface 2241 for placing the center plate 23 is formed. Further, on the inner peripheral side wall 2242 of the protrusion 224, rotation locks 2243 are formed for preventing rotation of the center plate 23 placed on the placement surface 2241. In Fig. 6, for the simplicity of the figure, only some of the rotation locks 2243 are given the reference numeral.

The under surface 2231 of the flange part 223 functions as the upper spring seat 74 which supports the upper end 80 of the coil spring 8.

The center plate 23 is fixed on the placement surface 2241 of the protrusion 224 formed on the upper surface 2230 of the flange part 223 of the lower case 22, and slides on the thrust support object surface 2150 formed in the groove bottom 215 of the annular groove 214 of the upper case 21, and slides on the radial support object surface 2160 formed in the inner peripheral side wall 216 of the annular groove 214 of the upper case 21. Accordingly, the center plate 23 functions as a bearing body that realizes free rotation between the upper case 21 and the lower case 22.

The center plate 23 requires such superior sliding characteristics that can allow relative rotation between the coil spring 8 and the upper support 9 by smaller torque than the torque generated by a twist of the coil spring 8 caused by the load of the vehicle applied to the damper assembly 6. As a material of the center plate 23 for realizing such sliding characteristics, it is possible to mention polyethylene resin, polyester thermoplastic elastomer, thermoplastic resin added with polytetrafluoroethylene (PTFE), brass alloy, and the like. Further, multi-layered material obtained by forming a sliding layer of synthetic resin on steel back plate via an intermediate layer can be used for the center plate 23, also.

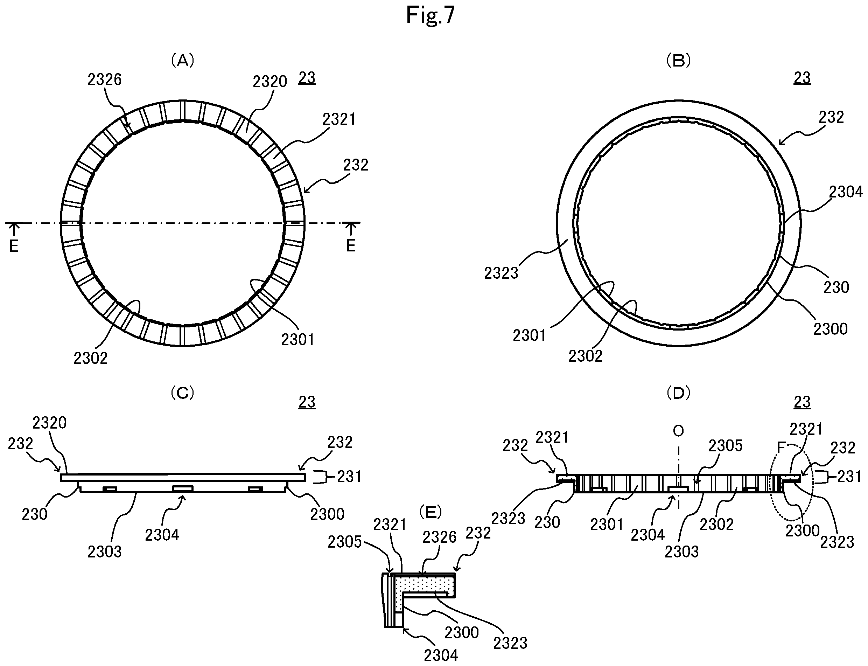

Figs. 7(A), 7(B), and 7(C) are respectively a front view, a back view, and a side view of the center plate 23, Fig. 7(D) is an E-E cross-section view of the center plate 23 shown in Fig. 7(A), and Fig. 7(E) an enlarged view of the part F of the center plate 23 shown in Fig. 7(D).

As shown in the figures, the center plate 23 comprises: a cylindrical rib part 230; a flange part 232, which is formed on the side of the upper end 231 of the rib part 230, to project outward in the radial direction from the outer peripheral surface 2300 of the rib part 230; the thrust bearing surface 2321, which is formed in the upper surface 2320 of the flange part 232; the radial bearing surface 2302, which is formed in the inner peripheral surface 2301 of the rib part 230; and a plurality of concave rotation locks 2304, which are formed on the side of the lower end surface 2303 of the rib part 230. In Fig. 7, for the simplicity of the figure, only some of the rotation locks 2304 are given the reference numeral.

The cylindrical rib part 230 is inserted into the inside of the annular protrusion 224 when the center plate 23 is placed on the lower case 22 so that the lower surface 2323 of the flange part 232 comes in contact with the placement surface 2241 of the annular protrusion 224 formed in the lower case 22.

The rotation locks 2304 are fitted to the respective rotation locks 2243 formed on the inner peripheral side wall 2242 of the annular protrusion 224 when the center plate 23 is placed on the lower case 22 so that the lower surface 2323 of the flange part 232 comes in contact with the placement surface 2241 of the protrusion 224 formed in the lower case 22, in order to prevent relative rotation of the center plate 23 to the lower case 22.

The thrust bearing surface 2321 slides on the thrust support object surface 2150 of the upper case 21. In the thrust bearing surface 2321, a plurality of radial grooves 2326 are formed in radial directions, to function as lubricating grease reservoirs. Lubricating grease held in the grooves 2326 lubricates the sliding area between the thrust bearing surface 2321 and the thrust support object surface 2150 of the upper case 21. In Fig. 7, for the simplicity of the figure, only some of the grooves 2326 are given the reference numeral.

The radial bearing surface 2302 slides on the radial support object surface 2160 of the upper case 21. In the radial bearing surface 2302, a plurality of axial grooves 2305 functioning as lubricating grease reservoirs are formed to be arranged in the circumferential direction. Lubricating grease held in the grooves 2305 lubricates the sliding area between the radial bearing surface 2302 and the radial support object surface 2160 of the upper case 21. In Fig. 7, for the simplicity of the figure, only some of the grooves 2305 are given reference numeral.

In the sliding bearing 2 of the above construction, the center plate 23 is fixed on the placement surface 2241 of the annular protrusion 224 formed on the upper surface 2230 of the flange part 223 of the lower case 22, slides on the thrust support object surface 2150 formed in the groove bottom 215 of the annular groove 214 of the upper case 21, and slides on the radial support object surface 2160 formed in the inner peripheral side wall 216 of the annular groove 214 of the upper case 21. Accordingly, the upper case 21 is rotatably combined with the lower case 22 while supporting the loads in the thrust and radial directions applied to the lower case 22. Here, the center plate 23 has the superior sliding characteristics that can allow relative rotation between the coil spring 8 and the upper support 9 by torque smaller than the torque generated by a twist of the coil spring 8 caused by the load of the vehicle applied to the damper assembly 6.

Accordingly, while supporting the load applied to the damper assembly 6, the sliding bearing 2 realizes relative rotation between the coil spring 8 and the upper support 9 by torque generated by a twist of the coil spring 8 caused by biased load supporting positions and compression of the coil spring 8 by the supported load.

Hereinabove, one embodiment of the present invention has been described.

In the present embodiment, the sliding bearing 2, which allows relative rotation between the coil spring 8 and the upper support 9, is disposed between the coil spring 8 disposed coaxially with the shock absorber 7 and the upper support 9 for fixing the coil spring 8 together with the shock absorber 7 to the body of the vehicle. This sliding bearing 2 allows relative rotation between the coil spring 8 and the upper support 9 by torque smaller than the torque generated by a twist of the coil spring 8 caused by the load of the vehicle applied to the damper assembly 6. Accordingly, according to the present embodiment, it is possible to prevent that the torque generated by the twist of the coil spring 8 caused by the load of the vehicle affects movement of the links, and thereby it is possible to improve the driving stability of the vehicle that employs the double wishbone type suspension 1.

Further, in the sliding bearing 2 according to the present embodiment, the lower surface 2231 of the flange part 223 of the lower case 22 functions as the upper spring seat 74 for supporting the upper end 80 of the coil spring 8, and thereby it is not necessary to provide an upper spring seat 74 as a separate member. Thus, it is possible to reduce costs by reducing the number of parts of the double wishbone type suspension 1.

The present invention is not limited to the above embodiment, and can be varied within the scope of the invention.

For example, in the sliding bearing 2, an annular lip which closes the gap between the thrust bearing surface 2321 and the thrust support object surface 2150 of the upper case 21 may be disposed around the center plate 23 in the annular space 24. By this arrangement, it is possible to prevent more efficiently that dust, muddy water, or the like, which has intruded into the annular space 24 through the labyrinth 25, further intrudes into the sliding area between the thrust bearing surface 2321 and the thrust support object surface 2150. This annular lip may be formed integrally with the center plate 23.

Further, the sliding bearing 2 uses the center plate 23 having the cylindrical rib part 230, in which the radial bearing surface 2302 is formed in the inner peripheral surface 2301, and the annular flange part 232, in which the thrust bearing surface 2321 is formed in the upper surface 2320. The present invention, however, is not limited to this. It is possible to provide separately: a center plate for radial bearing, which has a cylindrical rib part 230 with a radial bearing surface 2302 formed in the inner peripheral surface 2301; and a center plate for thrust bearing, which has a flange part 232 with a thrust bearing surface 2321 formed in the upper surface 2320.

Further, in the sliding bearing 2, although the center plate 23 is fixed to the lower case 22, the center plate 23 may be placed on the lower case 22 freely rotatably to the lower case 22. In other words, a bearing surface may be formed also in the lower surface 2323 of the flange part 232 of the center plate 23 as well as in the upper surface 2320 of the flange part 232, so that this bearing surface is made to come in slidable contact with the placement surface 2241 of the annular protrusion 224 formed on the upper surface 2230 of the lower case body 221 of the lower case 22. In this case, as a material of the lower case 22, it is favorable to use thermoplastic resin superior in sliding characteristics such as polyacetal resin impregnated, if necessary, with lubrication oil.

Further, in the sliding bearing 2, the lower surface 2231 of the flange part 223 of the lower case 22 functions as the upper spring seat 74 for supporting the upper end 80 of the coil spring 8. The present invention, however, is not limited to this . An upper spring seat may be provided separately, and the lower case 22 may be fixed to this upper spring seat.

Further, in the sliding bearing 2, it is possible to dispose a lubricating sheet of resin superior in sliding characteristics such as PTFE or metal superior in sliding characteristics such as brass alloy between the thrust bearing surface 2321 of the center plate 23 and the thrust support object surface 2150 of the upper case 21. By this arrangement, it is possible to reduce further the torque required for relative rotation between the upper case 21 and the lower case 22. Accordingly, it is possible to prevent more effectively that the torque generated by a twist of the coil spring 8 caused by the load of the vehicle affects movement of the links, and thereby it is possible to improve the driving stability furthermore.

Further, in the sliding bearing 2, the upper case 21 and the lower case 22 are rotatably combined via the center plate 23. The present invention, however, is not limited to this. It is possible that both of the upper case 21 and the lower case 22 are formed of thermoplastic resin superior in sliding characteristics, and the upper case 21 and the lower case are rotatably combined, to obtain a two-piece sliding bearing from which the center plate is omitted.

Further, in the sliding bearing 2, it is possible to omit the upper support 9 by giving the function of the upper support to the upper case 21, and to fix the sliding bearing 2 directly to the side of the body of the vehicle.

Further, in the case of the double wishbone type suspension 1, the sliding bearing 2 is used as a bearing that supports the load applied to the damper assembly 6 while allowing relative rotation between the coil spring 8 and the upper support 9. The present invention, however, is not limited to this. It is sufficient to use a bearing that can support the load applied to the damper assembly 6 while allowing relative rotation between the coil spring 8 and the upper support 9 by torque smaller than the torque generated by a twist of the coil spring 8 caused by the load. For example, a rolling bearing such as a ball bearing, a roller bearing, a needle bearing, or the like can be used.

In the case of the double wishbone type suspension 1 where a rolling bearing (in particular, a ball bearing) is used as a bearing that supports the load applied to the damper assembly 6 while allowing relative rotation between the coil spring 8 and the upper support 9, the relative rotation between the coil spring 8 and the upper support 9 is minute rotation owing to the torque generated by a twist of the coil spring 8 caused by the load of the vehicle applied to the damper assembly 6, and the contact locations between the bearing ring (race) and the rolling elements change only slightly. Accordingly, to prevent generation of Brinell impressions in the bearing ring, it is favorable to use material whose Rockwell hardness (HRC) is 56 or more for the bearing ring or to increase the hardness of the bearing ring by heat treatment.

In contrast, the sliding bearing 2 supports the load by all the surface of the bearing surface (thrust bearing surface 2321), and therefore it is not necessary to take countermeasures against Brinell impressions. Accordingly, as a bearing that supports the load applied to the damper assembly 6 while allowing relative rotation between the coil spring 8 and the upper support 9, the sliding bearing 1 is more suitable than the rolling bearing.

Further, in the double wishbone type suspension 1, an air spring instead of the coil spring 8 may be disposed coaxially with the shock absorber 7. In this case also, since torque is generated by a twist of the rubber bellows of the air spring owing to biased load supporting positions in the air spring as to the load of the vehicle applied to the damper assembly 6, it is possible to prevent this torque from affecting the movements of the links. Further, it is possible to prevent breakage of the rubber bellows owing to repeated twisting of the rubber bellows.

Further, although the above embodiment has been described taking the example where the present invention is applied to the double wishbone type suspension 1, the present invention can be applied similarly to the multi-link type suspension comprising a plurality of arms, a shock absorber, and a spring. Further, the present invention can be applied not only to a suspension disposed in the front part of a vehicle but also similarly to a suspension disposed in the rear part of a vehicle.

Further, the present invention can be applied not only to the double wishbone type suspension and the multi-link type suspension, in which the shock absorber and the spring are coaxially disposed, but also to the double wishbone type suspension and the multi-link type suspension, in which the shock absorber and the spring are disposed along respective axes different from each other. In the latter case, the bearing according to the present invention is disposed between one end of the spring and a fixing part for this end of the spring (and an arm for supporting the one end of the spring or a rubber mount for mounting the spring on the side of the vehicle body is disposed at this fixing part) in order to allow relative rotation between the spring and the support member.

### Reference Signs List

1: double wishbone type suspension; 2: sliding bearing; 3: upper arm; 4: lower arm; 5: carrier; 6: damper assembly; 7: shock absorber; 8: coil spring; 9: upper support; 20: receiving hole; 21: upper case; 22: lower case; 23: center plate; 24: annular space; 25: labyrinth; 30, 31: end of the upper arm 3; 40, 41: end of the lower arm 4; 32, 42: ball joint; 50, 51: end of the carrier 5; 70: piston rod; 71: lower spring seat; 72: bump stopper; 73: dust boot; 74: upper spring seat; 75: end of the shock absorber 7; 76: hinge; 80, 81: end of the coil spring 8; 210: insertion hole of the upper case 21; 211: upper case body; 212: upper surface of the upper case body 211; 213: lower surface of the upper case body 211; 214: annular groove of the upper case 21; 215: groove bottom of the annular groove 214; 216: inner peripheral side wall of the annular groove 214; 217: outer peripheral side wall of the annular groove 214; 220: insertion hole of the lower case 22; 221: lower case body; 222: upper end of the lower case body 221; 223: flange part of the lower case 22; 224: annular protrusion of the lower case 22; 230: cylindrical rib part of the center plate 23; 231: upper end of the rib part 230; 232: flange part of the center plate 23; 2120: fixing surface of the upper case 21; 2150: thrust support object surface of the upper case 21; 2160: radial support object surface of the upper case 21; 2170: concave and convex part of the annular groove 214; 2210: outer peripheral surface of the lower case body 221; 2230: upper surface of the flange part 223; 2231: lower surface of the flange part 223; 2232: outer peripheral surface of the flange part 223; 2233: concave and convex part of the flange part 223; 2240: upper surface of the protrusion 224; 2241: placement surface of the lower case 22; 2242: inner peripheral side wall of the protrusion 224; 2243: rotation lock of the lower case 22; 2300: outer peripheral surface of the rib part 230; 2301: inner peripheral surface of the rib part 230; 2302: radial bearing surface of the center plate 23; 2303: lower end surface of the rib part 230; 2304: rotation lock of the center plate 23; 2305: groove of the radial bearing surface 2302; 2320: upper surface of the flange part 232; 2321: thrust bearing surface of the center plate 23; 2323: lower surface of the flange part 232; and 2326: groove of the thrust bearing surface 2321.

## Claims

1. A bearing used for a double wishbone type or multi-link type suspension which has a plurality of arms, a shock absorber, and a spring, wherein:
the bearing is disposed between one end of the spring and a fixing part for the one end of the spring, and allows relative rotation between the spring and the fixing part.

2. A bearing of Claim 1, wherein:
the bearing allows relative rotation between the spring and the fixing part by a torque smaller than a torque that is generated by a twist of the spring caused by a load of a vehicle.

3. A bearing of Claim 1 or 2, wherein:
the one end of the spring is an upper end; and
the bearing comprises:
an upper case, which is disposed on a side of the fixing part;
a lower case, which is disposed on a side of the upper end of the spring; and
a center plate, which is disposed between the upper case and the lower case, to realize relative rotation between the upper case and the lower case.

4. A bearing of Claim 1 or 2, wherein:
the one end of the spring is an upper end; and
the bearing comprises:
an upper case, which is disposed on a side of the fixing part; and
a lower case, which is disposed on a side of the upper end of the spring, and rotatably combined with the upper case.

5. A bearing of one of Claims 1 - 4, wherein:
the spring is disposed coaxially with the shock absorber; and
an upper support for mounting the spring together with the shock absorber to a side of a vehicle body is disposed at the fixing part.

6. A bearing of one of Claims 1 - 4, wherein:
the spring is disposed along an axis different from an axis of the shock absorber; and
at the fixing part, an arm for supporting the one end of the spring or a rubber mount for mounting the spring on a side of a vehicle body is disposed.

7. A double wishbone type or multi-link type suspension, comprising:
a plurality of arms;
a shock absorber;
a spring; and
a bearing of one of Claims 1 - 6, which is disposed between one end of the spring and a fixing part for the one end.
